# EUROPÄISCHE PATENTANMELDUNG

(11) **EP 2 849 320 A2**
(43) Veröffentlichungstag der Anmeldung: **18.03.2015**
(21) Anmeldenummer: 14179896.7
(22) Anmeldetag: 05.08.2014
(51) Int. Cl.: H02K 15/00

(54) **Käfigläuferrotor für eine Asynchronmaschine mit angegossener Stabilisierung der Kurzschlussringe**

(30) Priorität: 16.09.2013 DE 102013218473
(71) Anmelder: ROBERT BOSCH GMBH, 70442 Stuttgart (DE)
(72) Erfinder: Schneider, Tobias, 70825 Korntal-Muenchingen (DE); Schuerg, Stefan, 71636 Ludwigsburg (DE); Heidrich, Markus, 71229 Leonberg (DE); Ruedinger, Stefan, 70563 Stuttgart (DE); Schwiderski, Michael, 71679 Asperg (DE)

(57) **Zusammenfassung**

Ein Verfahren zum Herstellen eines Käfigläuferrotors (10) einer Asynchronmaschine umfasst: Bereitstellen eines Blechpakets (14) mit einer Mehrzahl von Öffnungen (20) zur Aufnahme von Stäben (18) eines Läuferkäfigs (16); Positionieren eines Gießformteils (26) für einen Kurzschlussring (22) an einer Stirnseite (24) des Blechpakets (14); und Gießen der Stäbe (18) und des Kurschlussrings (22). Das Gießformteil (26) wird dabei an das Blechpaket (14) angegossen und verbleibt zur Stabilisierung des Kurzschlussrings (22) am Käfigläuferrotor (10).

## Beschreibung

### Gebiet der Erfindung

Die Erfindung betrifft Verfahren zum Herstellen eines Käfigläuferrotors und einen Käfigläuferrotor für eine Asynchronmaschine.

### Hintergrund der Erfindung

Drehstrom-Asynchronmaschinen (ASM) mit sogenannten Käfigläuferrotoren gehören zu den am weitesten verbreiteten elektrischen Antrieben (wie beispielsweise Normmotoren). Beispielsweise werden sie als Antriebe von Elektrofahrzeugen und Hybridfahrzeugen eingesetzt.

In einem Gehäuse der Asynchronmaschine befindet sich in der Regel ein Stator mit einer Drehstromwicklung. Der Stator erzeugt bei entsprechender Bestromung ein Drehfeld, welches einen Rotor in Bewegung versetzt. Der Rotor besteht normalerweise aus einem aus Blechen geschichteten Blechpaket, in das Stäbe eingebettet sind. Diese werden stirnseitig mit Kurzschlussringen miteinander verbunden. Die Stäbe und Kurzschlussringe bestehen in der Regel aus Aluminium, Kupfer bzw. speziellen Legierungen.

Als Fertigungsverfahren für den Rotor stehen neben vorgefertigten, gesteckten und stirnseitig mit den Kurzschlussringen verlöteten Stäben (bei kleinen Stückzahlen, wie etwa bei Bahnantrieben) auch Druckgussverfahren zur Verfügung.

Bei einem Druckgussverfahren kann der Rotorkäfig bestehend aus den einzelnen Rotorstäben und beiden Kurzschlussringen dabei in das Rotorblechpaket hineingegossen werden. Im Bereich der Stäbe dient das Blechpaket selbst mit seinen Nuten bzw. Öffnungen als Gießform, während die nach dem Gießen freiliegenden Kurzschlussringe durch spezielle, wiederverwendbare Gießformen geformt werden. Dieses Verfahren kommt insbesondere bei großen Stückzahlen zum Einsatz und steht sowohl für Aluminium- als auch Kupferdruckgussrotoren zur Verfügung. Druckgussrotoren werden vor allem bei netzgespeisten Asynchronmaschinen mit typischen Drehzahlen von 1.500/min bzw. 3.000 /min verwendet.

Insbesondere bei Kupferdruckguss müssen aufgrund der hohen Temperaturen von >1300°C hohe Qualitätsanforderungen an die Gießformen für die Kurzschlussringe gestellt werden, was die damit verbundenen Stückkosten erhöht.

Weiterhin kann sich der Rotor während des Abkühlprozesses durch das Schrumpfen des Kupfers verformen. Da insbesondere die beiden außen liegenden Kurzschlussringe einen großen Zug nach innen aufbauen, kann sich der Rotor tonnenförmig verformen. Dadurch kann ein Überdrehen des Rotors zum Einstellen eines definierten Luftspalts (typischerweise 0,2 mm bis 1,0 mm) nötig sein.

Weiter wird die Drehzahl der Maschine unter anderem durch die Festigkeit des Kurzschlussrings begrenzt. Die freiliegenden Kurzschlussringe bestehen aus elektrisch gut leitfähigem Material (wie etwa Cu oder Al), welches gegenüber anderen Metallen (beispielsweise Stahl) eine deutlich geringere Zugfestigkeit aufweist (Cu R_{p0,2} < 80 Nm/mm², Al R_{p0,2} < 40 Nm/mm²). Das kann die zulässige Maximaldrehzahl des Rotors reduzieren. Bei besonders hohen Anforderungen an die Drehzahlfestigkeit können die Kurzschlussringe durch aufgeschrumpfte Ringe bzw. Bandagen aus hochfestem Material (wie etwa Metalle bzw. faserverstärkte Verbundwerkstoffe) bandagiert werden.

### Zusammenfassung der Erfindung

Es ist Aufgabe der Erfindung, das Herstellungsverfahren eines Käfigläuferrotors für eine Asynchronmaschine zu vereinfachen und kostengünstiger auszugestalten, wobei gleichzeitig die Drehzahlfestigkeit gesteigert und die Maßhaltigkeit des Rotors verbessert wird.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft ein Verfahren zum Herstellen eines Käfigläuferrotors einer Asynchronmaschine. Die Asynchronmaschine kann beispielsweise ein Antrieb eines Fahrzeugs, wie etwa eines Zuges, Pkws, Lkws oder Busses sein.

Gemäß einer Ausführungsform der Erfindung umfasst das Verfahren: Bereitstellen eines Blechpakets mit einer Mehrzahl von Öffnungen bzw. Nuten zur Aufnahme von Stäben eines Läuferkäfigs; Positionieren eines Gießformteils für einen Kurzschlussring an einer Stirnseite des Blechpakets; und Gießen der Stäbe und des Kurschlussrings, beispielsweise mittels Druckguss. Das Gießformteil wird dabei an das Blechpaket angegossen und verbleibt zur Stabilisierung des Kurzschlussrings am Käfigläuferrotor. Es ist zu verstehen, dass auch die beiden Kurzschlussringe an den beiden Stirnseiten des Blechpakets gleichzeitig mit zwei Gießformteilen gleichzeitig gegossen werden können.

Relativ kostenintensive Gießwerkzeuge für die beiden Kurzschlussringe können durch "verlorene" Gießformen bzw. Gießformteile ersetzt werden, die nach dem Gießverfahren am Rotor verbleiben und dadurch die Funktion einer Kurzschlussring-Bandage übernehmen. Zum einen reduziert sich damit die hohe Anforderung an die Werkzeugstandfestigkeit des Gusswerkzeuges von >10.000 (bei 1300°C) auf 1. Es kann auf wesentlich günstigere Materialien ausgewichen werden. Zum anderen kann der Verbleib des Gießformteils am Kurzschlussring auch zu einer Stabilisierung der Rotorform während des Abkühlprozesses führen, da sich der oder die Kurzschlussringe nicht mehr nach innen zusammenziehen können, sondern dort durch einen mechanisch sehr festen Ring (z.B. Stahl) gestützt werden. Eine tonnenförmige Verformung des Rotors, die besonders bei Kupfer-Druckguss aufgrund der hohen Temperaturhübe signifikant ist, entfällt bzw. wird deutlich abgemildert. Weiter wird ein radiales Dehnen des Kurzschlussrings verhindert. Dadurch werden die Tangentialspannungen am Kurzschlussring vermindert.

Das am Kurzschlussring verbleibende Gießformteil kann die Funktion einer Kurzschlussringbandage übernehmen. Da das Gießformteil bereits beim Gießprozess eingebracht wird, kann eine nachträgliche Bearbeitung des Rotors zum Aufpressen der Bandage entfallen.

Gemäß einer Ausführungsform der Erfindung bildet das Gießformteil zusammen mit der Stirnseite des Blechpakets einen ringförmigen Hohlraum zum Formen des Kurzschlussrings. Das (beispielsweise ringförmige) Gießformteil kann beispielsweise einen U-förmigen Querschnitt aufweisen, der beispielsweise wie eine Kappe auf die Stirnseite aufgestülpt wird. Nach dem Gießen kann das Gießformteil den Kurzschlussring zumindest abschnittsweise in Umfangsrichtung um die Drehachse des Rotors U-förmig umgeben.

Gemäß einer Ausführungsform der Erfindung weist das Gießformteil einen in einen Raum für den Kurzschlussring hineinragenden Vorsprung zur Erhöhung der Verbindungsfestigkeit zwischen dem Gießformteil und dem Kurschlussring auf. Beispielsweise können an der Innenseite des Gießformteils Vorsprünge bzw. Erhöhungen zur Erhöhung der Verbindungsfläche für das Gießformteil und den Kurzschlussring angebracht sein. Diese Vorsprünge können das Gießformteil in Umfangsrichtung des Rotors umlaufen.

Gemäß einer Ausführungsform der Erfindung weist das Gießformteil bezüglich des Kurzschlussrings eine Hinterschneidung auf. Beispielsweise können die oben genannten Vorsprünge zu ihrem Ende hin breiter werden. Es ist auch möglich, dass das Gießformteil den Kurschlussring umgreift.

Gemäß einer Ausführungsform der Erfindung umfasst das Verfahren weiter: Positionieren des (ersten) Gießformteils und eines weiteren, zweiten Gießformteils für einen Kurzschlussring an einer Stirnseite des Blechpakets, wobei das Gießformteil und das weitere Gießformteil einen Raum zum Eingießen des Kurzschlussrings bereitstellen und beide Gießformteile am Käfigläuferrotor verbleiben. Anstatt lediglich einem Gießformteil pro Kurzschlussring können mehrere Gießformteile (beispielsweise zwei) als verlorene Gießform pro Kurzschlussring verwendet werden.

Gemäß einer Ausführungsform der Erfindung sind das erste Gießformteil und das zweite Gießformteil ringförmig. Insbesondere können zwei Gießformteile, die jeweils mit einem Ring von axialen Öffnungen ausgestaltet sind und die identisch geformt sein können, auch aufeinanderliegend als verlorene Gießform für einen Kurzschlussring verwendet werden. Auf diese Weise können die möglichen Formen des Kurzschlussrings erhöht werden, wobei die Komplexität der Gießformteile abnimmt.

Gemäß einer Ausführungsform der Erfindung werden das Gießformteil und das weitere Gießformteil derart auf dem Blechpaket positioniert, dass eine axiale Öffnung des Gießformteils zwei Öffnungen für einen Stab des Läuferkäfigs verbindet; und dass eine axiale Öffnung des weiteren Gießformteils zwei axiale Öffnungen des Gießformteils verbindet. Auf diese Weise entsteht ein mäanderförmiger Kanal durch die beiden Gießformteile und auf diese Weise ein mäanderförmiger Kurzschlussring.

Gemäß einer Ausführungsform der Erfindung bilden das Gießformteil und das weitere Gießformteil zum Formen eines Mittelstegs für den Kurzschlussring gemeinsam einen ringförmigen Hohlraum. Auf diese Weise kann ein Kurzschlussring geformt werden, der einen um die Drehachse des Rotors umlaufenden Ring umfasst.

Gemäß einer Ausführungsform der Erfindung umfasst das Verfahren weiter: Positionieren eines wiederverwendbaren Gießformteils auf einem am Käfigläuferrotor verbleibenden Gießformteil zur Vervollständigung einer Gießform. Es ist auch möglich, dass die verlorene Gießform bzw. das oder die Gießformteile den zugehörigen Kurzschlussring bzw. den Hohlraum, in den der Kurzschlussring gegossen wird, nicht vollständig umgeben. Die verbleibenden Außenöffnungen können mit einem weiteren Gießformteil, das nicht an dem Rotor verbleibt, sondern beim Gießen wiederverwendet wird, verschlossen werden. Auf diese Weise kann beispielsweise der Materialanteil des Kurzschlussrings erhöht und/oder der Materialanteil der Stabilisierung für den Kurzschlussring vermindert werden.

Gemäß einer Ausführungsform der Erfindung werden die Stäbe und der Kurzschlussring aus einem Material mit einer höheren elektrischen Leitfähigkeit als das Gießformteil gegossen, beispielsweise aus Kupfer und/oder Aluminium oder einer Legierung. Es ist aber möglich, dass auch die Gießform aus einem Material hergestellt wird, das elektrisch leitend ist und einen Teil der Funktion des Kurzschlussringes als Stromleiter übernimmt. Dadurch kann der Materialeinsatz beispielsweise eines Kupfer- oder Aluminium-Kurzschlussringes optimiert werden.

Gemäß einer Ausführungsform der Erfindung werden das oder die Gießformteile aus einem Material mit einer höheren mechanischen Zugfestigkeit als ein Material des Kurzschlussrings hergestellt, beispielsweise aus Metall (wie etwa Stahl) und/oder Keramik. Da die umschließende Gießform, die am Rotor verbleibt, aus hochfestem Material bestehen kann, sind deutlich gesteigerte Drehzahlen für die Asynchronmaschine möglich.

Gemäß einer Ausführungsform der Erfindung umfasst das Verfahren weiter: Wuchten des Käfigläuferrotors durch Bearbeiten des Gießformteils. Es besteht die Möglichkeit, das Gießformteil direkt als Wuchtebene zu nutzen, ohne dabei den Kurzschlussring anbohren zu müssen. Beispielsweise können Wuchtbohrungen in die Gießform eingebracht werden.

Ein weiterer Aspekt der Erfindung betrifft einen Käfigläuferrotor für eine Asynchronmaschine bzw. eine Asynchronmaschine mit einem Käfigläuferrotor.

Die Asynchronmachine umfasst beispielsweise ein Gehäuse, in dem ein Stator aufgenommen ist und in dem der Käfigläuferrotor drehbar im Stator gelagert ist. Der Stator umfasst eine Mehrzahl von Wicklungen, die bei Bestromung mit Wechselstrom ein Magnetfeld erzeugen, das im Käfig des Käfigläuferrotors Ströme erzeugen, die wiederum ein Magnetfeld erzeugen, das in Wechselwirkung mit dem Magnetfeld des Stators den Käfigläuferrotor in Drehung versetzt.

Gemäß einer Ausführungsform der Erfindung umfasst der Käfigläuferrotor ein Blechpaket, in das Blechpaket gegossene Stäbe und wenigstens einen an das Blechpaket gegossenen Kurzschlussring, die einen elektrisch leitfähigen Käfig bilden, und wenigstens ein Gießformteil zum Stabilisieren des Kurzschlussrings, das durch das Angießen des Kurzschlussrings an das Blechpaket mit dem Blechpaket verbunden wurde. Mit anderen Worten sind die Ringe bzw. Bandagen für den Kurzschlussring nicht auf den Kurzschlussring aufgepresst oder aufgesteckt, sondern werden bereits beim Gießen mit dem Kurzschlussring verbunden. Die Bandagen bzw. Ringe können dabei als Gießform für den Kurzschlussring dienen.

Der Käfigläuferrotor kann mit dem obenstehend und untenstehend beschriebenen Verfahren hergestellt worden sein. Es ist zu verstehen, dass Merkmale des Verfahrens auch Merkmale des Käfigläuferrotors sein können und umgekehrt.

Der Käfigläuferrotor ermöglicht bei reduzierten Herstellungskosten (da in der Regel wesentlich geringere Anforderungen an das Gießverfahren und die Gießwerkzeuge bestehen) den Betrieb der Asynchronmaschine bei höheren Drehzahlen ohne die Notwendigkeit von im Nachgang aufgeschrumpften Bandagen. Das erlaubt die Konstruktion einer Asynchronmaschine mit gesteigerter Leistungsdichte. Besonders im Bereich der Elektrotraktion strebt man nach hohen Motordrehzahlen (> 15.000/min), um bei geringen Drehmomenten kompakte elektrische Maschinen mit geringen Stoffkosten zu erreichen.

### Kurze Beschreibung der Figuren

Im Folgenden werden Ausführungsbeispiele der Erfindung mit Bezug auf die beiliegenden Figuren detailliert beschrieben.
Fig. 1 zeigt einen schematischen Teillängsschnitt durch einen Rotor gemäß einer Ausführungsform der Erfindung.
Fig. 2 zeigt einen schematischen Teillängsschnitt durch einen Rotor gemäß einer weiteren Ausführungsform der Erfindung.
Fig. 3 zeigt einen schematischen Teillängsschnitt durch einen Rotor gemäß einer weiteren Ausführungsform der Erfindung.
Fig. 4 zeigt ein Flussdiagramm für ein Herstellungsverfahren für einen Rotor gemäß einer Ausführungsform der Erfindung.
Fig. 5 zeigt eine perspektivische Ansicht eines Gießformteils für einen Rotor gemäß einer Ausführungsform der Erfindung.
Fig. 6 zeigt ein Blechpaket und zwei Gießformteile für einen Rotor gemäß einer Ausführungsform der Erfindung.
Fig. 7 zeigt Käfigstäbe und einen Kurzschlussring für den Rotor aus Fig. 6.
Fig. 8 zeigt einen Querschnitt durch zwei Gießformteile für einen Rotor gemäß einer Ausführungsform der Erfindung.
Fig. 9 zeigt einen Abschnitt eines Kurzschlussrings für einen Rotor gemäß einer Ausführungsform der Erfindung.

Grundsätzlich sind identische oder ähnliche Teile mit den gleichen Bezugszeichen versehen.

### Detaillierte Beschreibung von Ausführungsbeispielen

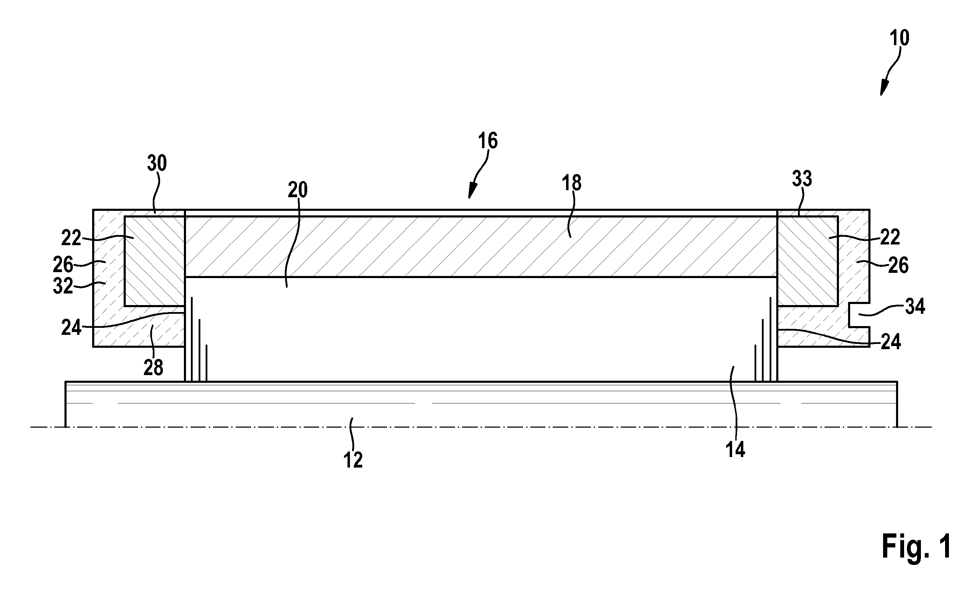

Fig. 1 zeigt einen schematischen Teillängsschnitt durch einen Käfigläuferrotor 10, der eine Welle 12, ein an der Welle 12 befestigtes Blechpaket bzw. Eisenpaket 14 und einen teilweise im Blechpaket 14 aufgenommenen Läuferkäfig 16 umfasst. Der Läuferkäfig 16 umfasst eine Mehrzahl von Stäben 18, die in Öffnungen oder Nuten 20 im Blechpaket 14 aufgenommen sind und die das Blechpaket 14 entlang der Welle 12 durchlaufen. Die Stäbe 18 sind über zwei Kurzschlussringe 22, die an Stirnseiten 24 des Blechpakets 14 angeordnet sind, miteinander verbunden.

Die Stäbe 18 und die Kurzschlussringe 22 (d.h. der Läuferkäfig 16) bestehen aus einem elektrisch leitfähigen Material wie Kupfer oder Aluminium, in dem durch ein Magnetfeld Wirbelströme induziert werden können. Der Läuferkäfig 16 wird mittels eines Gießverfahrens hergestellt, in dem in einem Arbeitsschritt die Stäbe und Kurzschlussringe 22 gleichzeitig und integral gegossen werden.

Jeder der Kurzschlussringe 22 ist von einem Gießformteil 26 bedeckt, das einen Teil der Gießform während des Gießens des Läuferkäfigs 16 bereitstellt und das nach dem Gießen am Käfigläuferrotor 10 verbleibt, d.h. angegossen wird. Das Gießformteil 26, das aus einem zugfesten Material wie etwa Stahl oder Keramik gefertigt ist, übernimmt die Funktion einer Bandage für den zugehörigen Kurzschlussring 22 und trägt zur Stabilisierung des Kurzschlussrings 22 bei.

Das Gießformteil 26 der Fig. 1 weist einen inneren Ring 28 und einen äußeren Ring 30 auf, die über eine ringförmige Scheibe 32 miteinander verbunden sind. Der Ring 28 kann in radialer Richtung dicker als der Ring 26 sein. Auf diese Weise bildet das Gießformteil 26 zusammen mit der Stirnseite 24 des Blechpakets 14 einen ringförmigen Kanal bzw. Hohlraum 33, in den der Kurzschlussring 22 eingegossen werden kann.

Die beiden Gießformteile 26 für die beiden Kurzschlussringe 22 an den Stirnseiten 24 des Rotors 10 können spiegelsymmetrisch sein.

Die Gießformteile 26 können auch zum Wuchten des Rotors 10 verwendet werden und eine Wuchtbohrung 34 aufweisen.

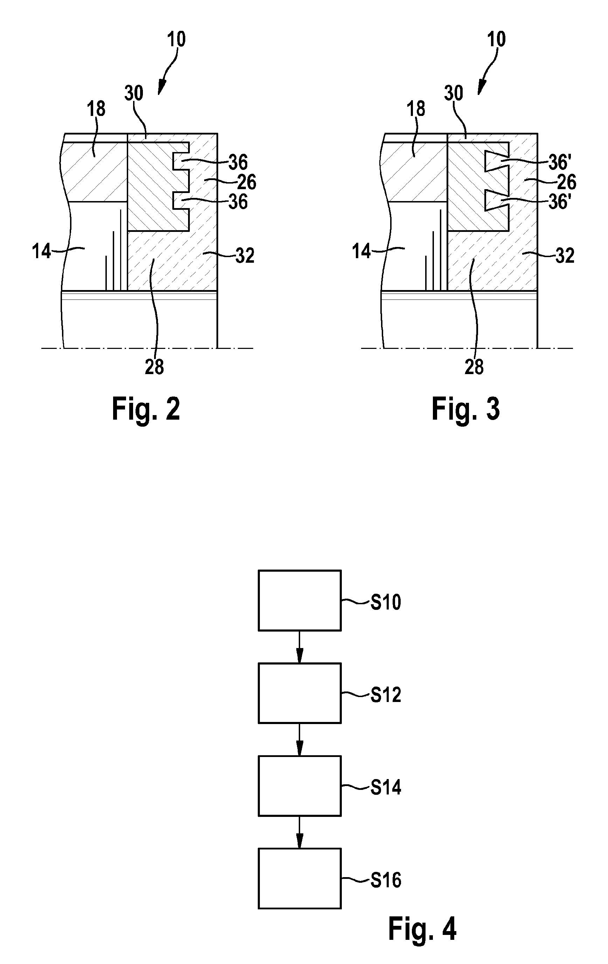

Die Fig. 2 und 3 zeigen weitere Ausführungsformen eines Rotors 10 mit gesteigerter Drehzahlfestigkeit durch gezielte Verbindung des Kurzschlussrings 22 mit dem Gießformteil 26. In der Fig. 2 sind Vorsprünge 34 an der Scheibe 32 angebracht, die die Welle 12 ringförmig umlaufen und die in axialer Richtung in den Raum für den Kurzschlussring 22 hineinragen. Wie in der Fig. 3 gezeigt ist, können die Vorsprünge 34 auch einen Hinterschnitt aufweisen.

Fig. 4 zeigt ein Herstellungsverfahren für den Rotor 10.

Im Schritt S10 werden das Blechpaket 14 und die Gießformteile 26 bereitgestellt.

Im Schritt S12 werden die beiden kappenförmigen Gießformteile 26 an den beiden Stirnseiten 24 des Blechpakets 14 positioniert, so dass jeweils ein Hohlraum 33 für die Kurzschlussringe 22 entsteht. Die beiden Gießformteile 26 können dabei in einer Presse an die Stirnseiten 24 gepresst werden.

Im Schritt S14 werden die Stäbe 18 und die Kurschlussringe 22 gegossen, beispielsweise mittels eines Druckgussverfahrens. Dazu kann ein verflüssigtes Metallmaterial über einen Anguss 39 in einem Gießformteil 26 in den Gießformteilen 26 und den Öffnungen 20 im Blechpaket gegossen werden. Die Gießformteile 26 übernehmen dabei die Gießformgebung der Kurzschlussringe 22.

Nach dem Erkalten des Metallmaterials bleiben Gießformteile 26 am jeweiligen Kurzschlussring 22 und übernehmen die Funktion einer drehzahlsteigernden Kurzschlussringbandage. Abbildung 3b und c zeigen eine weitere Ausführungsform. Wie in den Fig. 2 und 3 gezeigt, können die Gießformteile 26 durch beliebige innere Formgebung mit dem gegossenen Kurzschlussring 22 verbunden werden, so dass sich durch gezielte Formgebung (beispielsweise durch gezielte Hinterschneidungen 34') eine optimale Stützwirkung im Betrieb ergibt.

Im optionalen Schritt S16 kann der Rotor 10 durch Bearbeiten der Gießformteile gewuchtet werden. Beispielsweise kann an einer Stelle eine Bohrung 34 in einem Gießformteil 26 erzeugt werden.

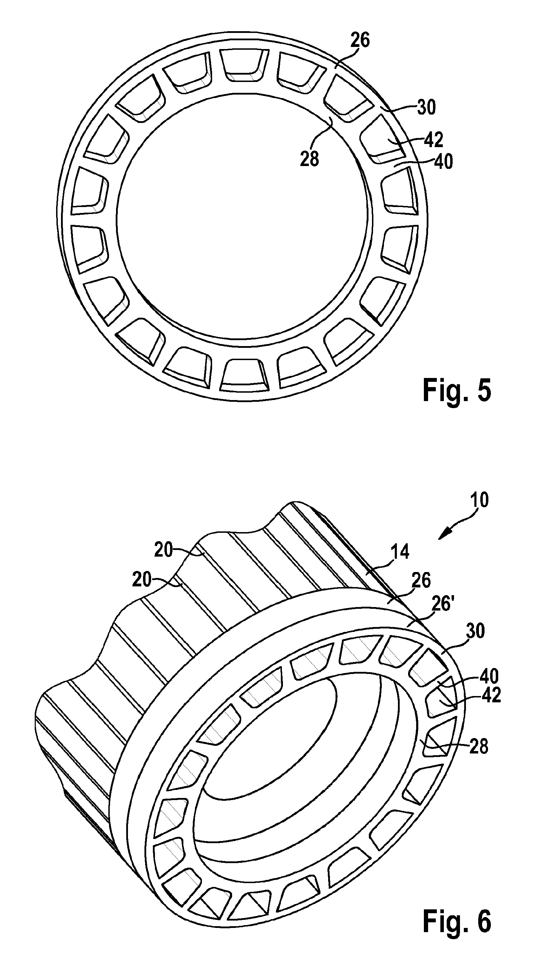

Fig. 5 zeigt eine perspektivische Ansicht eines (scheibenförmigen) Gießformteils 26 für eine weitere Ausführungsform eines Rotors 10. Das Gießformteil 26 umfasst zwei Ringe 28, 30, die über Stege 40 miteinander verbunden sind, so dass eine Mehrzahl von axialen Öffnungen bzw. Fenster 42 durch das Gießformteil 26 gebildet sind. Das Gießformteil 26 kann beispielsweise gegossen oder gestanzt sein.

Die Fig. 6 zeigt ein Blechpaket 14 und zwei Gießformteile 26, 26', wie sie in der Fig. 5 beschrieben sind. Alternativ zu lediglich einem Gießformteil können im Schritt S12 vor dem Gießen des Rotors im Schritt S14 an den Stirnflächen 24 jeweils zwei Gießformteile 26, 26' für einen Kurzschlussring 22 fixiert werden.

Das Gießformteil 26 verbindet mit seinen Öffnungen jeweils zwei Öffnungen bzw. Nuten 20 im Blechpaket 14. Das Gießformteil ist um eine halbe Öffnungsbreite verdreht. Eine Öffnung 42 des weiteren Gießformteils 26' verbindet damit zwei axiale Öffnungen 42 des Gießformteils 26.

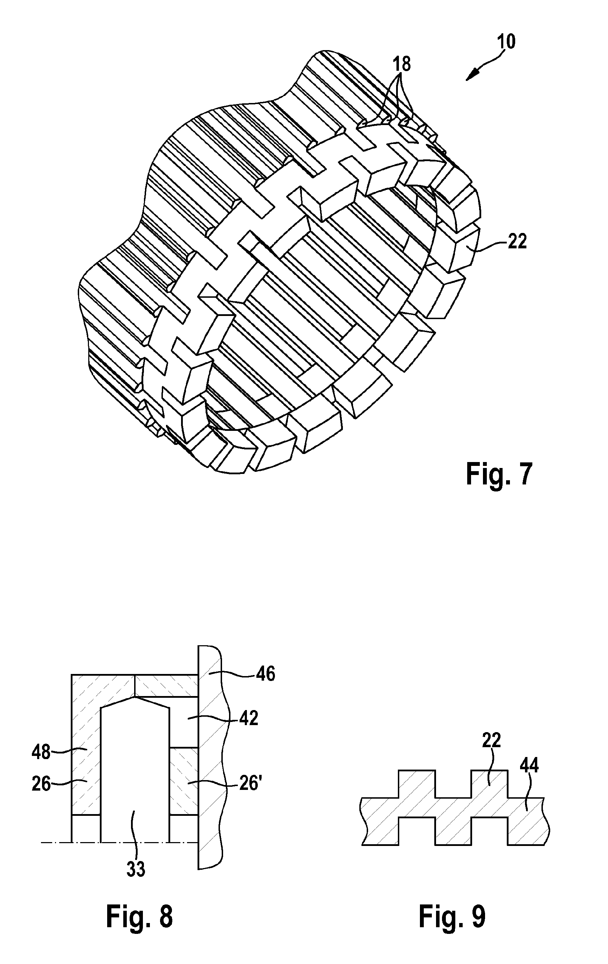

Die Fig. 7 zeigt Käfigstäbe 18 und einen Kurzschlussring 22, die nach dem Gießen im Schritt S14 des Blechpakets 14 und den Gießformteilen 26, 26 aus der Fig. 6 entstanden ist. Nach dem Gießen ergibt sich ein Läuferkäfig 16 mit einem mäanderförmigen Kurzschlussring 22. Dieser wird von den Gießformteilen 26, 26' umschlossen.

Fig. 8 zeigt einen Querschnitt durch alternative Ausführungsformen zweier abgesetzter Gießformteile 26, 26`, die zwischen sich einen ringförmigen Hohlraum 33 bilden, in dem, wie in der Fig. 9 gezeigt ist, ein Kurzschlussring 22 mit einem Mittelsteg 44 beim Gießen geformt wird. Der Mittelsteg 44 kann die elektrische Leitfähigkeit im Kurzschlussring erhöhen.

In der Fig. 8 ist auch gezeigt, dass ein wiederverwendbares Gießformteil 46 auf einem am Käfigläuferrotor 10 verbleibenden Gießformteil 26' zur Vervollständigung einer Gießform positioniert werden kann. Das Gießformteil 46 verschließt die axialen Öffnungen 42 des Gießformteils 26'.

Wie auch aus der Fig. 8 hervorgeht, weist das Gießformteil 26 eine Hinterschneidung 48 auf, die durch eine auf dem Blechpaket 14 abgelegte Seite gebildet wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Herstellen eines Käfigläuferrotors (10) einer Asynchronmaschine, das Verfahren umfassend:
Bereitstellen eines Blechpakets (14) mit einer Mehrzahl von Öffnungen (20) zur Aufnahme von Stäben (18) eines Läuferkäfigs (16);
Positionieren eines Gießformteils (26) für einen Kurzschlussring (22) an einer Stirnseite (24) des Blechpakets (14);
Gießen der Stäbe (18) und des Kurschlussrings (22);
**dadurch gekennzeichnet, dass**
das Gießformteil (26) an das Blechpaket (14) angegossen wird und zur Stabilisierung des Kurzschlussrings (22) am Käfigläuferrotor (10) verbleibt.

2. Verfahren nach Anspruch 1,
wobei das Gießformteil (26) zusammen mit der Stirnseite (24) des Blechpakets (14) einen ringförmigen Hohlraum (33) zum Formen des Kurzschlussrings (22) bildet.

3. Verfahren nach Anspruch 1 oder 2,
wobei das Gießformteil (26) einen in einen Raum (33) für den Kurzschlussring (22) hineinragenden Vorsprung (36, 36') zur Erhöhung der Verbindungsfestigkeit zwischen dem Gießformteil (26) und dem Kurschlussring (22) aufweist.

4. Verfahren nach einem der vorhergehenden Ansprüche,
wobei das Gießformteil (26) bezüglich des Kurzschlussrings (22) eine Hinterschneidung (34', 46) aufweist.

5. Verfahren nach einem der vorhergehenden Ansprüche, weiter umfassend:
Positionieren des Gießformteils (26) und eines weiteren Gießformteils (26') für einen Kurzschlussring (22) an einer Stirnseite (24) des Blechpakets (14), wobei das Gießformteil (26) und das weitere Gießformteil (26') einen Raum (33) zum Eingießen des Kurzschlussrings (22) bereitstellen und beide Gießformteile (26, 26') am Käfigläuferrotor (10) verbleiben.

6. Verfahren nach Anspruch 5,
wobei das Gießformteil (26) und das weitere Gießformteil (26') ringförmig mit axialen Öffnungen (42) ausgestaltet sind;
wobei das Gießformteil (26) und das weitere Gießformteil (26') derart auf dem Blechpaket (14) positioniert werden, dass
eine axiale Öffnung (42) des Gießformteils (26) zwei Öffnungen (20) für einen Stab (18) des Läuferkäfigs (16) verbindet; und dass eine axiale Öffnung (42) des weiteren Gießformteils (26') zwei axiale Öffnungen des Gießformteils (26) verbindet.

7. Verfahren nach Anspruch 5 oder 6,
wobei das Gießformteil (26) und das weitere Gießformteil (26) zum Formen eines Mittelstegs (44) für den Kurzschlussring (22) gemeinsam einen ringförmigen Hohlraum (33) bilden.

8. Verfahren nach einem der vorhergehenden Ansprüche, weiter umfassend: Positionieren eines wiederverwendbaren Gießformteils (48) auf einem am Käfigläuferrotor (10) verbleibenden Gießformteil (26') zur Vervollständigung einer Gießform.

9. Verfahren nach einem der vorhergehenden Ansprüche,
wobei die Stäbe (18) und der Kurzschlussring (22) aus einem Material mit einer höheren elektrischen Leitfähigkeit als das Gießformteil (26) gegossen werden; und/oder
wobei die Stäbe (18) und der Kurzschlussring (22) aus Kupfer und/oder Aluminium gegossen werden.

10. Verfahren nach einem der vorhergehenden Ansprüche,
wobei das Gießformteil (26, 26') aus einem Material mit einer höheren mechanischen Zugfestigkeit als ein Material des Kurzschlussrings (22) hergestellt wird; und/oder
wobei das Gießformteil (26, 26') aus Metall und/oder Keramik hergestellt wird.

11. Verfahren nach einem der vorhergehenden Ansprüche, weiter umfassend: Wuchten des Käfigläuferrotors (10) durch Bearbeiten des Gießformteils (26, 26').

12. Käfigläuferrotor (10) für eine Asynchronmaschine, der Käfigläuferrotor umfassend:
ein Blechpaket (14);
in das Blechpaket (14) gegossene Stäbe (18) und wenigstens einen an das Blechpaket (14) gegossenen Kurzschlussring (22);
ein Gießformteil (26, 26') zum Stabilisieren des Kurzschlussrings (22), das durch das Angießen des Kurzschlussrings (22) an das Blechpaket (14) mit dem Blechpaket (14) verbunden wurde.
